# EUROPÄISCHE PATENTSCHRIFT

(11) **EP 1 713 661 B1**
(45) Veröffentlichungstag und Bekanntmachung des Hinweises auf die Patenterteilung: **02.07.2008**
(21) Anmeldenummer: 05700735.3
(22) Anmeldetag: 07.01.2005
(51) Int. Cl.: B60R 7/06

(54) **KOMPONENTE, INSBESONDERE FÜR EIN FAHRZEUG, DIE UM EINE KLAPPACHSE KLAPPBAR IST UND BEFESTIGUNGSELEMENT**
COMPONENT, PARTICULARLY FOR A VEHICLE, WHICH CAN PIVOT ABOUT A PIVOT AXIS
ELEMENT CONSTITUTIF, NOTAMMENT POUR VEHICULE, POUVANT ETRE RABATTU AUTOUR D'UN AXE MOBILE ET ELEMENT DE FIXATION

(30) Priorität: 30.01.2004 DE 102004004983
(43) Veröffentlichungstag der Anmeldung: 25.10.2006
(73) Patentinhaber: Johnson Controls Interiors GmbH & Co. KG, 47929 Grefrath (DE)
(72) Erfinder: JOST, Fritz, 47929 Grefrath (DE); LANGMANN, Holger, 65199 Wiesbaden (DE)
(74) Vertreter: Wolff, Felix
(86) Internationale Anmeldenummer: PCT/EP2005/000078
(87) Internationale Veröffentlichungsnummer: WO 2005/073030

(56) Entgegenhaltungen:
- US-A- 6 003 925

## Beschreibung

Die vorliegende Erfindung betrifft eine Komponente, insbesondere für ein Fahrzeug, die um eine Klappachse klappbar und mit einem Befestigungselement zusammenwirkend vorgesehen ist.

Ausstattungskomponenten in Fahrzeugen, wie sie in der gattungsbildenden US 6 003 925 beschrieben sind, sind gegebenenfalls sehr aufwendig. Klappen bzw. Deckel, beispielsweise zum Verschließen von Fächern, insbesondere in Fahrzeugen oder Möbeln, sind häufig mit Federungen ausgestattet, um das Öffnen und/oder Schließen der Klappen durch den Nutzer einfacher durchführen zu können. Grundsätzlich sollten Ausstattungskomponenten kostengünstig herstellbar und für den Nutzer leicht zu bedienen sein.

Aufgabe der Erfindung ist, eine Ausstattungskompanente zu schaffen, die um eine Achse klappbar ist, die möglichst wenige Bauteile aufweist, kostengünstig herstellbar ist und für den Nutzer leicht bedienbar ist.

Die Aufgabe wird gelöst mit einer Komponente gemäß Patentanspruch 1.

Beim Klappen der erfindungsgemäßen Komponente wird das Drehelement mit der Komponente retativ zum Befestigungselement gedreht. Dabei bildet die Drehachse des Drehelementes mit der Klappachse der Komponente erfindungsgemäß einen Winkel oder die Klappachse und die Drehachse sind versetzt, d. h. parallel verschoben und nicht fluchtend, angeordnet; es wird erfindungsgemäß auch von einem Fluchtungsfehler gesprochen. Die Komponente kann insbesondere als Handschuhfach oder als Deckel eines Handschuhfachs vorgesehen sein bzw. allgemein ein Fahrzeuginnenausstattungsteil sein.

Im Gegensatz zu einer erfindungsgemäßen Komponente ist beispielsweise eine Tür um eine globale Drehachse - die Klappachse - klappbar. Die Tür ist üblicherweise an zumindest zwei Türangeln aufgehängt, die fluchtend miteinander angeordnet sind und deren Drehachsen folglich mit der Klappachse zusammenfallen. Wenn zumindest für eine der Türangeln die (lokale) Drehachse gekippt ist bzw. die Türangeln zueinander versetzt angeordnet sind, d. h. nicht mehr fluchten, entstehen Spannungen in der Tür, den Türangeln und/oder der Türzarge. Solche Spannungen bzw. solche Fluchtungsfehler werden erfindungsgemäß bei einer erfindungsgemäßen Komponente nutzbar gemacht. Es wird daher im folgenden von der Klappachse gesprochen, wenn die "globale" Drehachse gemeint ist und es wird von der (lokalen) Drehachse der Drehelemente gesprochen, die auch als Scharnierachse bezeichnet wird. Die Klappachse und die Drehachse fallen erfindungsgemäß zumindest nicht bei jedem Drehelement zusammen.

Der Winkel, den die Drehachse des Drehelementes mit der Klappachse der erfindungsgemäßen Komponente bildet bzw. ihr Versatz, bewirkt Spannungen im Material des Drehelementes, der Komponente und/oder des Befestigungselementes.

Der Fachmann versteht, dass die beim Klappen der Komponente hervorgerufene Spannung in Abhängigkeit vom Material, beispielsweise bei Verwendung von verschiedenen Metallen oder Metalllegierungen im Vergleich zu verschiedenen Kunststoffen, und in Abhängigkeit von der Form, beispielsweise durch Einfügen von Rippen oder Änderung der Materialstärke, zu unterschiedlichen Verformungen der Komponente und/oder des Befestigungselementes und/oder des Drehelementes führt. Der Fachmann versteht ebenfalls, dass bei gleichbleibendem Material und gleichbleibender Form ein größerer Winkel der Drehachse des Drehelementes zur Klappachse eine größere Spannung hervorruft. Daher ist das Material und die Form der Komponente und/oder des Befestigungselementes und/oder des Drehelementes so vorzusehen, dass die durch das Klappen bewirkte Spannung nicht zu einer irreversiblen plastischen Verformung führt und dass ein Verklemmen der Komponente oder des Befestigungselementes mit dem Drehelement sicher vermieden wird.

Erfindungsgemäß bewirkt ein Klappen der Komponente eine elastische Spannung in der Komponente bewirkt, wobei die elastische Spannung eine rücktreibende Kraft verursacht, die auf die Komponente wirkt. In einer weiteren ebenfalls bevorzugten Ausführungsform bewirkt ein Klappen der Komponente eine elastische Spannung in dem Drehelement, wobei die elastische Spannung eine rücktreibende Kraft verursacht, die auf die Komponente wirkt. Die elastische Spannung wird durch eine Verformung der Komponente, des Befestigungselementes und/oder des Drehelementes beim Klappen der Komponente hervorgerufen. Die Verformung ist reversibel, so dass die gespeicherte Energie beim Zurückklappen der Komponente wieder frei wird. Dies äußert sich durch eine rücktreibende Kraft. Da die Verformung der Komponente, des Befestigungselementes und/oder des Drehelementes vom Material und von der Form der Komponente abhängig ist, kann der Kraftverlauf der durch die Verformung entstehenden rücktreibenden Kraft durch Veränderung des Materials und der Form der Bauteile gezielt beeinflusst werden.

Erfindungsgemäß wird das Material und die Form des Drehelementes, der Komponente und/oder des Befestigungselementes so gewählt, dass trotz der entstehenden Verformung ein Verklemmen des Drehelementes mit der Komponente und/oder dem Befestigungselement sicher vermieden wird. Hierdurch ist die Komponente im wesentlichen in jeder Klappstellung trotz der zumindest teilweise vorhandenen erfindungsgemäßen Spannung relativ leichtgängig gegenüber einem weiteren Klappen oder gegenüber einem Zurückklappen.

Die rücktreibende Kraft verändert die vom Nutzer tatsächlich benötigte Kraft beim Klappen der Komponente gegenüber der Situation ohne die rücktreibende Kraft und kann die Bedienung durch den Nutzer vorteilhaft unterstützen. Im allgemeinen geht nämlich die Klappachse nicht durch den Schwerpunkt der Komponente, weshalb die Gewichtskraft der Komponente in manchen Klappstellungen beispielsweise zum weiteren Öffnen der Komponente bzw. zum Weiterklappen führt. In einem solchen Fall müsste ein Benutzer die Wirkung der Gewichtskraft beim Zurückklappen überwinden. Erfindungsgemäß kann die rücktreibende Kraft derart wirken, dass der Benutzer in einer solchen Situation unterstützt wird, d. h. beispielsweise, dass die zum Schließen benötigte Kraft kleiner ist.

Vorzugsweise ist die Komponente und/oder das Drehelement so geformt, dass der Kraftverlauf der rücktreibenden Kraft nichtlinear ist.

Vorteilhafterweise können Änderungen der Steigung, beispielsweise Wendepunkte, im Kraftverlauf vorgesehen sein, so dass die rücktreibende Kraft beim Klappen der Komponente lokale maximale oder lokale minimale Werte annehmen kann. Dadurch können beispielsweise Kraftverläufe der vom Nutzer tatsächlich benötigten Kraft realisiert sein, die für den Nutzer wie Einrastpunkte wirken und ihm bevorzugte Öffnungswinkel der Komponente zur Verfügung stellen, so dass eine gezielte Unterstützung oder Erleichterung beim Klappen der Komponente durch den Nutzer erreichbar ist.

Bevorzugt kompensiert die rücktreibende Kraft die Schwerkraft so, dass die Änderung des wirkenden Anteils der Gewichtskraft beim Klappen der Komponente für den Nutzer nicht spürbar ist und zwar insbesondere auch, wenn der wirkende Anteil der Gewichtskraft groß ist. Dem Nutzer wird daher die Bedienung der Komponente erleichtert.

In einer bevorzugten Ausführungsform umfasst die Komponente zwei Drehelemente, wobei mindestens eine der Drehachsen der Drehelemente einen Winkel zur Klappachse bildet oder zur Klappachse versetzt angeordnet ist. Die elastische Spannung ist daher mit nur einem Drehelement, dessen Drehachse mit der Klappachse der Komponente einen Winkel bildet, erreichbar, während die Drehachse des zweiten Drehelementes keinen Winkel zur Klappachse der Komponente bilden muss. Vorteilhaft bilden jedoch die Drehachsen beider Drehelemente einen Winkel zur Klappachse, wobei dieser bevorzugt den gleichen Betrag aufweist und deren Drehachsen der Drehelemente bevorzugt auch einen Winkel zueinander bilden. Bei entsprechender Materialwahl und Form der Komponente, des Befestigungselementes und/oder der Drehelemente verteilt sich dadurch die erzeugte elastische Spannung im wesentlichen gleichmäßig, so dass die Belastung der Bauteile reduziert ist.

Bevorzugt sind die beiden Drehelemente zu einer gedachten Ebene senkrecht zur Klappachse im wesentlichen spiegelsymmetrisch angeordnet. Dadurch können die Drehelemente Im wesentlichen gleich sein, so dass die Anzahl der Bauteile reduziert ist. Dies ist kostengünstig in Bezug auf die Lagerhaltung und Fertigung der Komponente.

Vorzugsweise beträgt der Winkel zwischen der bzw. den Drehachsen und der Klappachse ca. 5°-15°. Je größer der Winkel zwischen der Drehachse und der Klappachse gewählt ist, um so stärker ist bei gleichem Material und gleicher Form die Spannung in der Komponente, dem Befestigungselement und/oder dem Drehelement Um so elastischer muss das Material und die Form dieser Bauteile gewählt sein, damit die Spannung nicht zu einer irreversiblen plastischen Verformung führt damit die Bauteile nicht miteinander verklemmen und damit keine Klappgeräusche auftreten.

Bevorzugt ist das Drehelement zylinderförmig, insbesondere ein Zapfen oder Rohr. Dies sind Bauteile, die einen geringen Fertigungs- und daher Kostenaufwand verursachen.

Die erfindungsgemäße Komponente ist mit wenigen Bauteilen einfach und kostengünstig herstellbar. Aufgrund der Einstellbarkeit des Kraftverlaufes mittels Materialwahl und Form ist das Klappen der Komponente für den Nutzer erfindungsgemäß leicht möglich.

Im folgenden wird die Erfindung anhand der Figuren 1-3 beschrieben. Die Beschreibungen sind lediglich beispielhaft und schränken den allgemeinen Erfindungsgedanken nicht ein.
- **Figur 1**: zeigt eine Seitenansicht einer erfindungsgemäßen Ausführungsform eines Handschuhfachs für ein Fahrzeug.
- **Figur 2**: zeigt eine Teilansicht des Handschuhfachs aus Figur 1.
- **Figur 3**: zeigt einen Ausschnitt aus einem Cockpit eines Autos.

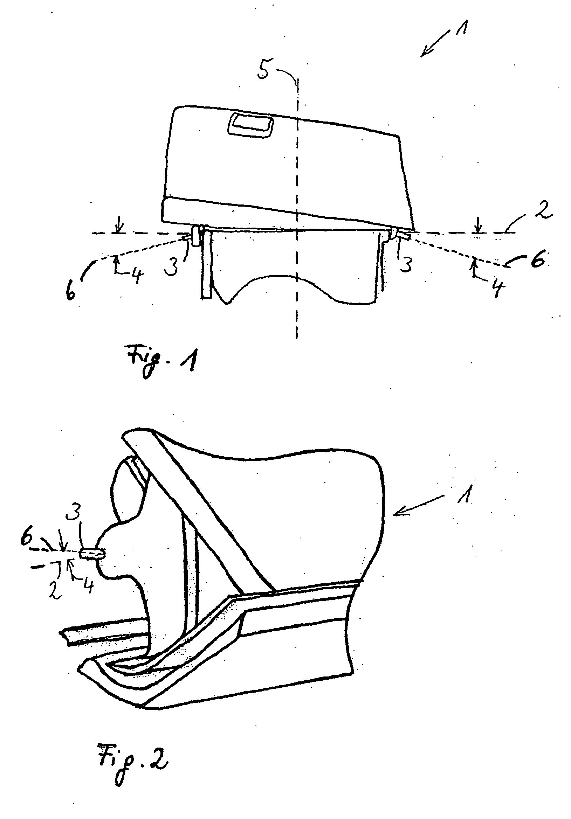

In Figur 1 ist als Beispiel einer Komponente 1 ein Handschuhfach 1 für ein Fahrzeug dargestellt. Das Handschuhfach 1 ist um eine Klappachse 2 klappbar. Zur Befestigung des Handschuhfachs 1, beispielsweise in einem Cockpit eines Fahrzeugs, umfasst es zwei Drehelemente 3 In Form von Zapfen 3, die jeweils eine Drehachse 6 aufweisen, wobei die Drehachsen 6 jeweils einen Winkel 4 zur Klappachse 2 bilden. Die Drehelemente 3 sind zu einer gedachten Ebene 5 senkrecht zur Klappachse 2 im wesentlichen symmetrisch angeordnet. Befestigungselemente 7 zur Befestigung des Handschuhfachs 1 im Cockpit sind in der Figur 1 nicht sichtbar. Der Fachmann erkennt, dass es sich beispielsweise um zylinderförmige Hülsen oder Aufnahmen handelt. In denen die Zapfen 3 gelagert sind. Beim Öffnen des Handschuhfachs 1 werden die Drehelemente 3 um die Drehachse 6, die zur Klappachse 2 des Handschuhfachs 1 den Winkel 4 aufweist, in den Hülsen bzw. Aufnahmen gedreht. Dadurch entsteht eine elastische Spannung, die durch entsprechende Materialwahl und Form des Handschuhfachs 1, der Befestigungselemente 7 und/oder der Zapfen 3 beeinflussbar ist. Das Material des Handschuhfachs 1, des Befestigungselementes 7 und/oder der Zapfen 3 wird dabei im wesentlichen elastisch verformt. Dies führt zu einer (reversiblen) elastischen Spannung, die eine bevorzugt nichtlineare, rücktreibende Kraft bewirkt. Durch geeignete Wahl des Materials und der Form wird der Verlauf der rücktreibenden Kraft bevorzugt so vorgesehen, dass das Öffnen des Handschuhfachs 1 gedämpft erfolgt und die vom Nutzer tatsächlich benötigte Kraft beim Schließen des Handschuhfachs 1 ist, so dass die Bedienung des Handschuhfachs 1 für den Nutzer leichter ist.

In Figur 2 ist zur Verdeutlichung ein Teilausschnitt des Handschuhfachs 1 aus einem anderen Blickwinkel gezeigt. Sichtbar ist der Zapfen 3, dessen Drehachse 6 mit der Klappachse 2 der Komponente den Winkel 4 bildet.

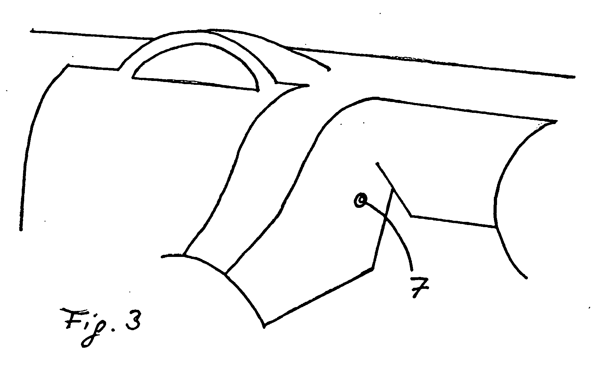

In Figur 3 ist ein Ausschnitt aus einem Cockpit eines Autos gezeigt. In der vorliegenden Ausführung weist das Cockpit als Befestigungselemente 7 Aufnahmen zur Lagerung der zapfenförmigen Drehelemente 3 des Handschuhfachs 1 auf, wobei nur eine der beiden Aufnahmen 7 sichtbar ist.

Eine mögliche nicht dargestellte Ausführungsform des Befestigungselementes ist ein Cockpit, das die Drehelemente 3 umfasst und daher selbst das Befestigungselement 7 darstellt.

Die erfindungsgemäße Komponente 1 sowie das Befestigungselement 7 sind in einer Vielzahl unterschiedlicher Fahrzeugtypen wie beispielsweise Autos, Schiffe oder Flugzeuge einsetzbar. Sie sind ebenfalls als Ausstattungskomponenten für Möbel verwendbar.

### Bezugszeichenliste:

- 1: Komponente, Handschuhfach
- 2: Klappachse
- 3: Drehelement, Zapfen
- 4: Winkel zwischen der Klappachse und der Drehachse eines Drehelementes
- 5: gedachte Ebene senkrecht zur Klappachse
- 6: Drehachse eines Drehelementes
- 7: Befestigungselement, Aufnahme zur Lagerung eines Drehelementes

## Patentansprüche

1. Komponente (1) für ein Fahrzeug, die um eine Klappachse (2) klappbar ist und die ein Drehelemente (3) aufweist, das mit einem Befestigungselement (7) zusammenwirkt, wobei sich das Drehelement mit der Komponente relativ zum Befestigungselement dreht und das Drehelement (3) um eine Drehachse (6) drehbar ist, die einen Winkel (4) zur Klappachse (2) bildet oder zur Klappachse (2) versetzt angeordnet ist, **dadurch gekennzeichnet, dass** ein Klappen eine elastische Spannung in der Komponente (1) bewirkt, wobei die elastische Spannung eine rücktreibende Kraft verursacht, die auf die Komponente (1) wirkt.

2. Komponente (1) nach Anspruch 1, **dadurch gekennzeichnet, dass** die Komponente (1) und/oder das Drehelement (3) so geformt ist, dass der Kraftverlauf der rücktreibenden Kraft nichtlinear ist.

3. Komponente (1) nach einem der vorherigen Ansprüche, **dadurch gekennzeichnet, dass** die rücktreibende Kraft die Schwerkraft kompensiert.

4. Komponente (1) nach einem der vorherigen Ansprüche, **dadurch gekennzeichnet, dass** die Komponente (1) zwei Drehelemente (3) umfasst, wobei mindestens eine der Drehachsen (6) der Drehelemente (3) einen Winkel (4) zur Klappachse (2) bildet oder zur Klappachse (2) versetzt angeordnet ist.

5. Komponente (1) nach einem der vorherigen Ansprüche, **dadurch gekennzeichnet, dass** die beiden Drehelemente (3) zu einer gedachten Ebene (5) senkrecht zur Klappachse (2) im wesentlichen spiegelsymmetrisch angeordnet sind.

6. Komponente (1) nach einem der vorherigen Ansprüche, **dadurch gekennzeichnet, dass** der Winkel bevorzugt ca. 5° - 15° beträgt.

7. Komponente (1) nach einem der vorherigen Ansprüche, **dadurch gekennzeichnet, dass** das Drehelement (3) zylinderförmig, insbesondere ein Zapfen oder Rohr, ist.

## Claims

1. Component (1) for a vehicle, which is capable of folding about a folding axis (2) and which has a rotating element (3) which interacts with a fastener (7), the rotating element rotating with the component in relation to the fastener and the rotating element (3) being capable of rotating about an axis of rotation (6) which forms an angle (4) with the folding axis (2) or is arranged offset in relation to the folding axis (2), **characterized in that** a folding produces an elastic stress in the component (1), the elastic stress causing a restoring force, which acts on the component (1).

2. Component (1) according to Claim 1, **characterized in that** the component (1) and/or the rotating element (3) is shaped so that the force curve of the restoring force is non-linear.

3. Component (1) according to any one of the preceding Claims, **characterized in that** the restoring force compensates for the gravitational force.

4. Component (1) according to any one of the preceding Claims, **characterized in that** the component (1) comprises two rotating elements (3), at least one of the axes of rotation (6) of the rotating elements (3) forming an angle (4) with the folding axis (2) or being arranged offset in relation to the folding axis (2) .

5. Component (1) according to any one of the preceding Claims, **characterized in that** the two rotating elements (3) are arranged basically mirror-symmetrically about an imaginary plane (5) perpendicular to the folding axis (2).

6. Component (1) according to any one of the preceding Claims, **characterized in that** the angle is preferably approximately 5° - 15°.

7. Component (1) according to any one of the preceding Claims, **characterized in that** the rotating element (3) is cylindrical, particularly in the form of a pin or tube.

## Revendications

1. Composant (1) pour un véhicule, qui peut être rabattu autour d'un axe de rabattement (2) et qui présente un élément rotatif (3) qui coopère avec un élément de fixation (7), l'élément rotatif tournant avec le composant par rapport à l'élément de fixation et l'élément rotatif (3) pouvant tourner autour d'un axe de rotation (6) qui forme un angle (4) par rapport à l'axe de rabattement (2) ou qui est disposé de manière décalée par rapport à l'axe de rabattement (2), **caractérisé en ce qu'**un rabattement provoque une contrainte élastique dans le composant (1), la contrainte élastique provoquant une force de rappel qui agit sur le composant (1).

2. Composant (1) selon la revendication 1, **caractérisé en ce que** le composant (1) et/ou l'élément rotatif (3) sont formés de telle sorte que l'allure de la force de rappel ne soit pas linéaire.

3. Composant (1) selon l'une quelconque des revendications précédentes, **caractérisé en ce que** la force de rappel compense la force de gravité.

4. Composant (1) selon l'une quelconque des revendications précédentes, **caractérisé en ce que** le composant (1) comprend deux éléments rotatifs (3), au moins l'un des axes de rotation (6) des éléments rotatifs (3) formant un angle (4) par rapport à l'axe de rabattement (2) ou étant disposé de manière décalée par rapport à l'axe de rabattement (2).

5. Composant (1) selon l'une quelconque des revendications précédentes, **caractérisé en ce que** les deux éléments rotatifs (3) sont disposés essentiellement symétriquement par rapport à un plan imaginaire (5) perpendiculairement à l'axe de rabattement (2).

6. Composant (1) selon l'une quelconque des revendications précédentes, **caractérisé en ce que** l'angle vaut de préférence environ 5 à 15 °.

7. Composant (1) selon l'une quelconque des revendications précédentes, **caractérisé en ce que** l'élément rotatif (3) est cylindrique, notamment est un tourillon ou un tube.
